# EUROPEAN PATENT APPLICATION

(11) **EP 4 746 570 A1**
(43) Date of publication of application: **20.05.2026**
(21) Application number: 24851010.9
(22) Date of filing: 06.08.2024
(51) Int. Cl.: H04W 74/08

(54) **COMMUNICATION METHOD AND APPARATUS**

(30) Priority: 10.08.2023 CN 202311015571
(71) Applicant: Huawei Technologies Co., Ltd., Shenzhen, Guangdong 518129 (CN)
(72) Inventor: YOU, Chunhua, Shenzhen, Guangdong 518129 (CN); FAN, Qiang, Shenzhen, Guangdong 518129 (CN)
(74) Representative: MERH-IP Matias Erny Reichl Hoffmann Patentanwälte PartG mbB
(86) International application number: PCT/CN2024/110152
(87) International publication number: WO 2025/031365

(57) **Abstract**

This application relates to the field of communication technologies, and discloses a communication method and apparatus. The method includes: receiving, in a first cell, a random access request from a first terminal; determining that the random access request corresponds to first random access or second random access; and sending TA of the first cell to a first network device when the random access request corresponds to the first random access; or sending the TA of the first cell to the first terminal when the random access request corresponds to the second random access, where the first random access is random access before switch, and the second random access is random access after switch. According to the foregoing method, both the random access before switch (that is, the first random access) and the random access after switch (that is, the second random access) may be supported, so that one type of random access thereof can be flexibly performed based on an actual requirement.

## Description

### CROSS-REFERENCE TO RELATED APPLICATIONS

This application claims priority to Chinese Patent Application No. 202311015571.8, filed with the China National Intellectual Property Administration on August 10, 2023 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

Cell switch is a very important feature in a communication system, and is mainly triggered by movement of a terminal when the terminal is in a radio resource control (radio resource control, RRC) connected state, so that before signal quality of a serving cell cannot support communication, the terminal switches to a neighboring cell with good signal quality, providing continuous and uninterrupted communication services.

A scenario in which the terminal switches from a cell 1 to a cell 2 is used as an example. The terminal needs to obtain timing advance (timing advance, TA) of the cell 2. For example, the terminal may obtain the TA of the cell 2 through random access, and then send, in the cell 2, uplink information based on the TA of the cell 2.

However, a related implementation of obtaining the TA through random access still needs to be further studied.

### SUMMARY

This application provides a communication method and apparatus, to support both random access before switch and random access after switch, so that one type of random access thereof can be flexibly performed based on an actual requirement.

**According to a first aspect,** an embodiment of this application provides a communication method. The method may be applied to a network device (for example, a second DU, where the second DU is a candidate DU or a target DU) or a module (for example, a chip or a circuit) in the network device. For example, the method is applied to the second DU. In the method, the second DU receives, in a first cell, a random access request from a first terminal; determines that the random access request corresponds to first random access or second random access; and sends timing advance TA of the first cell to a first network device when the random access request corresponds to the first random access; or sends the TA to the first terminal when the random access request corresponds to the second random access. The first random access is random access before switch, and the second random access is random access after switch.

According to the foregoing method, after receiving, in the first cell, the random access request from the first terminal, the second DU may determine a specific random access type corresponding to the random access request, and perform a corresponding operation, so that both the random access before switch (that is, the first random access) and the random access after switch (that is, the second random access) may be supported, and one type of random access thereof can be flexibly performed based on an actual requirement.

In a possible design, determining that the random access request corresponds to the first random access or the second random access includes: if a random access resource corresponding to the random access request is a first random access resource, determining that the random access request corresponds to the first random access; or if a random access resource corresponding to the random access request is a second random access resource, determining that the random access request corresponds to the second random access.

In this way, the first random access and the second random access may correspond to different random access resources, so that after receiving the random access request, the second DU can determine, based on the random access resource corresponding to the random access request, that the random access request corresponds to the first random access or the second random access, thereby facilitating an implementation.

In a possible design, the method further includes: sending a first message to the first network device, where the first message indicates that the first random access resource corresponds to the first random access and the second random access resource corresponds to the second random access.

In a possible design, the method further includes: receiving a first request message from the first network device, where the first request message is for requesting to allocate a random access resource corresponding to the first random access and a random access resource corresponding to the second random access.

In this way, the second DU may allocate, based on a request of the first network device (for example, a CU), a random access resource corresponding to the first random access and a random access resource corresponding to the second random access, thereby facilitating flexible management and control of the CU.

In a possible design, the first random access is contention-free random access; and the first random access resource is used by a plurality of terminals to perform the first random access, and source network devices of the plurality of terminals are all second network devices.

In this way, because the first random access resource corresponding to the first random access may be shared by a plurality of terminals of the second network device (for example, a first DU), the first DU can flexibly allocate the first random access resource to a corresponding terminal for use, so that random access resource utilization is improved, a large quantity of terminals can initiate the first random access, and a switch delay is reduced.

In a possible design, the second random access is contention-free random access; and the second random access resource is used by a plurality of terminals to perform the second random access, and source network devices of the plurality of terminals are all second network devices. In this way, the first DU can flexibly allocate the first random access resource to a corresponding terminal for use, to improve random access resource utilization. Alternatively, the second random access resource is dedicated to the first terminal. In this way, a success rate of the second random access is improved.

In a possible design, the method further includes: receiving first indication information from a second network device; and determining, based on the first indication information, that the random access request corresponds to the first random access or the second random access.

In this way, the second DU may determine, based on the first indication information of the second network device (for example, the first DU), a specific random access type corresponding to the random access request, thereby facilitating flexible management and control of the first DU.

In a possible design, the random access request corresponds to a third random access resource; and determining, based on the first indication information, that the random access request corresponds to the first random access or the second random access includes: if the first indication information indicates that the third random access resource corresponds to the first random access, determining that the random access request corresponds to the first random access; or if the first indication information indicates that the third random access resource corresponds to the second random access, determining that the random access request corresponds to the second random access.

In a possible design, the method further includes: sending a second message to the first network device, where the second message indicates that the third random access resource corresponds to the first random access and the second random access.

In a possible design, the method further includes: receiving a second request message from the first network device, where the second request message is for requesting to allocate a random access resource corresponding to the first random access and the second random access.

In a possible design, both the first random access and the second random access are contention-free random access; and the third random access resource is used by a plurality of terminals to perform the first random access and the second random access, and source network devices of the plurality of terminals are all second network devices.

In a possible design, sending the TA to the first terminal includes: receiving second indication information from the second network device, where the second indication information indicates beam information of the first cell; and sending a random access response to the first terminal based on the beam information, where the random access response includes the TA.

In this way, the second DU may send the random access response to the first terminal based on the beam information of the first cell, so that the first terminal receives the random access response, thereby improving a success rate of random access.

**According to a second aspect,** an embodiment of this application provides a communication method. The method may be applied to a network device (for example, a source DU) or a module (for example, a chip or a circuit) in the network device. For example, the method is applied to the network device. In the method, the network device receives a third message from a first network device, where the third message indicates that a first random access resource corresponds to first random access, and a second random access resource corresponds to second random access; and if it is determined that a first terminal needs to initiate the first random access, sending third indication information to the first terminal, where the third indication information indicates the first terminal to send a first random access request in a first cell on the first random access resource; or if it is determined that the first terminal needs to initiate the second random access, sending fourth indication information to the first terminal, where the fourth indication information indicates the first terminal to send a second random access request in the first cell on the second random access resource. The first random access is random access before switch, and the second random access is random access after switch.

In a possible design, if it is determined that the first terminal needs to initiate the first random access, the method further includes: receiving TA of the first cell from a third network device; and sending a switch command to the first terminal, where the switch command indicates that the first cell is a target cell, and the switch command includes the TA.

In a possible design, if it is determined that the first terminal needs to initiate the second random access, the method further includes: sending second indication information to the third network device, where the second indication information indicates beam information of the first cell, and the beam information is used by the third network device to send the TA of the first cell to the first terminal.

In a possible design, if it is determined that the first terminal needs to initiate the second random access, the method further includes: sending fifth indication information to the first terminal, where the fifth indication information indicates the beam information of the first cell, and the beam information is used by the first terminal to receive the TA of the first cell.

In a possible design, the first random access is contention-free random access; and the first random access resource is used by a plurality of terminals to perform the first random access, and source network devices of the plurality of terminals are all second network devices.

In a possible design, the second random access is contention-free random access; and the second random access resource is used by a plurality of terminals to perform the second random access, and source network devices of the plurality of terminals are all second network devices, or the second random access resource is dedicated to the first terminal.

**According to a third aspect,** an embodiment of this application provides a communication method. The method may be applied to a network device (for example, a source DU) or a module (for example, a chip or a circuit) in the network device. For example, the method is applied to the network device. In the method, the network device receives a fourth message from a second network device, where the fourth message indicates that a third random access resource corresponds to first random access and second random access; and if it is determined that a first terminal needs to initiate the first random access, sending third indication information to the first terminal, where the third indication information indicates the first terminal to send a first random access request in a first cell on the third random access resource; or if it is determined that the first terminal needs to initiate the second random access, sending fourth indication information to the first terminal, where the fourth indication information indicates the first terminal to send a second random access request in the first cell on the third random access resource. The first random access is random access before switch, and the second random access is random access after switch.

In a possible design, if it is determined that the first terminal needs to initiate the first random access, the method further includes: receiving TA of the first cell from a third network device; and sending a switch command to the first terminal, where the switch command indicates that the first cell is a target cell, and the switch command includes the TA.

In a possible design, the method further includes: sending first indication information to the third network device, where if it is determined that the first terminal needs to initiate the first random access, the first indication information indicates that the third random access resource corresponds to the first random access; or if it is determined that the first terminal needs to initiate the second random access, the first indication information indicates that the third random access resource corresponds to the second random access.

In a possible design, if it is determined that the first terminal needs to initiate the second random access, the method further includes: sending second indication information to the third network device, where the second indication information indicates beam information of the first cell, and the beam information is used by the third network device to send the TA of the first cell to the first terminal.

In a possible design, if it is determined that the first terminal needs to initiate the second random access, the method further includes: sending fifth indication information to the first terminal, where the fifth indication information indicates the beam information of the first cell, and the beam information is used by the first terminal to receive the TA of the first cell.

In a possible design, both the first random access and the second random access are contention-free random access; and the third random access resource is used by a plurality of terminals to perform the first random access and the second random access, and source network devices of the plurality of terminals are all second network devices.

It may be understood that the method claimed in the second aspect or the third aspect corresponds to the first aspect. For beneficial effects of related technical features in the second aspect or the third aspect, refer to the descriptions of the first aspect. Details are not described again.

**According to a fourth aspect,** this application provides a communication apparatus. The communication apparatus has a function of implementing the first aspect to the third aspect. For example, the communication apparatus includes a corresponding module, unit, or means for performing operations in the first aspect to the third aspect. The function, the unit, or the means may be implemented by software, may be implemented by hardware, or may be implemented by hardware by executing corresponding software.

In a possible design, the communication apparatus includes a processing unit and a communication unit. The communication unit may be configured to receive a signal and send a signal, to implement communication between the communication apparatus and another apparatus. For example, the communication unit is configured to send system information to a terminal. The processing unit may be configured to perform some internal operations of the communication apparatus. Functions performed by the processing unit and the communication unit may correspond to the operations in the first aspect to the third aspect.

In a possible design, the communication apparatus includes a processor, and the processor may be configured to be coupled to a memory. The memory may store a necessary computer program or necessary instructions for implementing the functions in the first aspect to the third aspect. The processor may execute the computer program or the instructions stored in the memory. When the computer program or the instructions are executed, the communication apparatus is caused to implement the method according to any one of the possible designs or implementations of the first aspect to the third aspect.

In a possible design, the communication apparatus includes a processor and a memory. The memory may store a necessary computer program or necessary instructions for implementing the functions in the first aspect to the third aspect. The processor may execute the computer program or the instructions stored in the memory. When the computer program or the instructions are executed, the communication apparatus is caused to implement the method according to any one of the possible designs or implementations of the first aspect to the third aspect.

In a possible design, the communication apparatus includes a processor and an interface circuit. The processor is configured to: communicate with another apparatus through the interface circuit, and perform the method according to any one of the possible designs or implementations of the first aspect to the third aspect.

It may be understood that in the fourth aspect, the processor may be implemented by hardware or may be implemented by software. When the processor is implemented by hardware, the processor may be a logic circuit, an integrated circuit, or the like. When the processor is implemented by software, the processor may be a general-purpose processor, and is implemented by reading software code stored in the memory. In addition, there may be one or more processors, and one or more memories. The memory may be integrated with the processor, or the memory and the processor are disposed separately. In a specific implementation process, the memory and the processor may be integrated into one chip, or may be separately disposed on different chips. A type of the memory and a manner in which the memory and the processor are disposed are not limited in embodiments of this application.

**According to a fifth aspect,** this application provides a communication system. The communication system may include a first communication apparatus and a second communication apparatus. The first communication apparatus is configured to perform the method according to the first aspect, and the second communication apparatus is configured to perform the method according to the second aspect and/or the third aspect.

**According to a sixth aspect,** this application provides a computer-readable storage medium, where the computer storage medium stores computer-readable instructions, and when a computer reads and executes the computer-readable instructions, the computer is caused to perform the method according to any one of the possible designs of the first aspect to the third aspect.

**According to a seventh aspect,** this application provides a computer program product. When a computer reads and executes the computer program product, the computer is caused to perform the method according to any one of the possible designs of the first aspect to the third aspect.

**According to an eighth aspect,** this application provides a chip, where the chip includes a processor, and the processor is coupled to a memory, and is configured to read and execute a software program stored in the memory, to implement the method according to any one of the possible designs of the first aspect to the third aspect.

### BRIEF DESCRIPTION OF DRAWINGS

FIG. 1 is a diagram of a communication system architecture applicable to an embodiment of this application;
FIG. 2A is a schematic flowchart of a type of random access according to an embodiment of this application;
FIG. 2B is a schematic flowchart of another type of random access according to an embodiment of this application;
FIG. 3 is a schematic flowchart related to first random access according to an embodiment of this application;
FIG. 4 is a schematic flowchart related to second random access according to an embodiment of this application;
FIG. 5 is a schematic flowchart corresponding to a communication method according to Embodiment 1 of this application;
FIG. 6 is a schematic flowchart corresponding to a communication method according to Embodiment 2 of this application;
FIG. 7 is a possible example block diagram of an apparatus according to an embodiment of this application; and
FIG. 8 is a diagram of a structure of a communication apparatus according to an embodiment of this application.

### DESCRIPTION OF EMBODIMENTS

The following describes the technical solutions in embodiments of this application with reference to accompanying drawings in embodiments of this application. The technical solutions in embodiments of this application may be applied to various communication systems, such as a universal mobile telecommunications system (universal mobile telecommunications system, UMTS), a wireless local area network (wireless local area network, WLAN) system, a wireless fidelity (wireless fidelity, Wi-Fi) system, a 4th generation (4th generation, 4G) mobile communication system, like a long term evolution (long term evolution, LTE) system, a 5th generation (5th generation, 5G) mobile communication system, like a new radio (new radio, NR) system, and a future evolved communication system, like a 6th generation (6th generation, 6G) mobile communication system.

All aspects, embodiments, or features are presented in this application by describing a system that may include a plurality of devices, components, modules, and the like. It should be appreciated and understood that each system may include another device, component, module, and the like, and/or may not include all devices, components, modules, and the like discussed with reference to the accompanying drawings. In addition, a combination of these solutions may be used. In addition, in embodiments of this application, terms such as "example" and "for example" are used to give an example, an illustration, or a description. Any embodiment or design scheme described as an "example" in this application should not be explained as being more preferred or having more advantages than another embodiment or design scheme. Exactly, the term "example" is used to present a concept in a specific manner. In embodiments of this application, "of (of)", "relevant (relevant)", and "corresponding (corresponding)" may be interchangeably used sometimes. It should be noted that meanings expressed by the terms are consistent when differences are not emphasized.

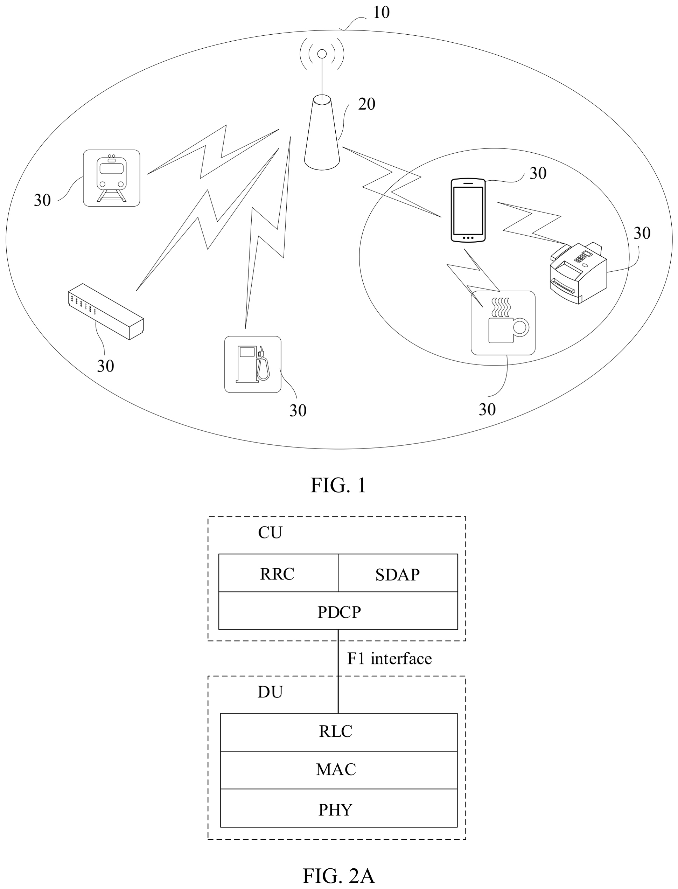

For ease of understanding embodiments of this application, a communication system shown in FIG. 1 is first used as an example to describe in detail a communication system applicable to embodiments of this application. As shown in FIG. 1, the communication system 10 includes one or more network devices 20 and one or more terminals 30. An interface between the network device and the terminal may be a Uu interface (or referred to as an air interface), and data transmission may be performed between the network device 20 and the terminal 30 on an air interface resource. For example, the terminal may be located within communication coverage of one or more cells of the network device. There may be one or more cells (that is, a serving cell of the terminal) providing services for the terminal. When there are a plurality of serving cells of the terminal, the terminal may operate based on one or more of the following transmission technologies: carrier aggregation (carrier aggregation, CA), dual connectivity (dual connectivity, DC), coordinated multipoint (coordinated multipoint, CoMP) transmission, and multiple transmission reception point (multiple transmission reception point, mTRP).

### (1) Terminal

The terminal may be a device that accesses the foregoing communication system and has a wireless transceiver function. The terminal may also be referred to as user equipment (user equipment, UE), a terminal device, a user apparatus, an access terminal, a subscriber unit, a subscriber station, a mobile station (mobile station, MS), a remote station, a remote terminal, a mobile device, a user terminal, a terminal unit, a terminal station, a terminal apparatus, a wireless communication device, a user agent, or a user apparatus.

For example, the terminal in embodiments of this application may be a mobile phone (mobile phone), a personal digital assistant (personal digital assistant, PDA) computer, a laptop computer (laptop computer), a pad (Pad), an uncrewed aerial vehicle, a computer that has a wireless transceiver function, a machine type communication (machine type communication, MTC) terminal, a virtual reality (virtual reality, VR) terminal, an augmented reality (augmented reality, AR) terminal, an internet of things (internet of things, IoT) terminal, a wireless terminal in industrial control (industrial control), a wireless terminal in self-driving (self-driving), a wireless terminal in remote medical (remote medical), a wireless terminal in a smart grid (smart grid), a wireless terminal in transportation safety (transportation safety), a wireless terminal in a smart city (smart city), a wireless terminal (for example, a game console, a smart television, a smart speaker, a smart refrigerator, or fitness equipment) in a smart home (smart home), a vehicle-mounted terminal, or an RSU that has a terminal function.

### (2) Network device

The network device is a device that is located on a network side of the foregoing communication system and has a wireless transceiver function.

For example, the network device in embodiments of this application may be an access point (access point, AP) in a Wi-Fi system, like a home gateway, a router, a server, a switch, or a bridge, a base station, an evolved NodeB (evolved NodeB, eNB), a radio network controller (radio network controller, RNC), a base station controller (base station controller, BSC), a base transceiver station (base transceiver station, BTS), a home base station, a baseband unit (baseband unit, BBU), a wireless relay node, a wireless backhaul node, a transmission point (transmission reception point, TRP, or transmission point, TP), or the like. Alternatively, the network device may be a next generation NodeB (next generation NodeB, gNB) in a 5G system, or a network node that forms a gNB, for example, a central unit (central unit, CU), a distributed unit (distributed unit, DU), or a road side unit (road side unit, RSU) that has a base station function, or may be a satellite or a base station in any form in the future.

### (3) Communication between the terminal and the network device

Communication between the terminal and the network device conforms to a specific protocol layer structure. For example, a control plane protocol layer structure may include an RRC layer, a packet data convergence protocol (packet data convergence protocol, PDCP) layer, a radio link control (radio link control, RLC) layer, a media access control (media access control, MAC) layer, and a physical (physical, PHY) layer. A user plane protocol layer structure may include a PDCP layer, an RLC layer, a MAC layer, and a physical layer. In a possible implementation, a service data adaptation protocol (service data adaptation protocol, SDAP) layer may be further included above the PDCP layer. The SDAP layer, the PDCP layer, the RLC layer, the MAC layer, and the physical layer may be collectively referred to as an access stratum. For detailed descriptions of the foregoing protocol layers, refer to related technical specifications of a 3rd generation partnership project (3rd generation partnership project, 3GPP).

An example in which downlink data transmission is used. Downlink data may be correspondingly encapsulated at each layer of the network device. Data received by a specific layer from an upper layer of the layer is considered as a service data unit (service data unit, SDU) of the layer, and becomes a protocol data unit (protocol data unit, PDU) through layer encapsulation to be transmitted to a next layer. For example, data received by a PDCP layer entity from the SDAP layer may be referred to as a PDCP SDU. After encapsulating the PDCP SDU, the PDCP layer entity obtains a PDCP PDU and sends the PDCP PDU to the RLC layer. The PDCP PDU received by an RLC layer entity from the PDCP layer may be referred to as an RLC SDU. After encapsulating the RLC SDU, the RLC layer entity obtains an RLC PDU and sends the RLC PDU to the MAC layer.

From a perspective of the terminal, after the physical layer of the terminal receives a transport block from the network device, the transport block may be sequentially transmitted from the physical layer to upper layers, and may be correspondingly decapsulated at each layer. In other words, processing performed at each layer of the terminal may be processing in an inverse process performed at each layer of the network device.

### (4) CU-DU split architecture

For example, in some possible network structures, the network device may include one or more central units (central unit, CU) and/or one or more distributed units (distributed unit, DU). A plurality of DUs may be centrally controlled by one CU. Such an architecture may be referred to as the CU-DU split architecture. For example, an interface between the CU and the DU may be referred to as an F1 interface. A control plane (control panel, CP) interface may be an F1-C interface, and a user plane (user panel, UP) interface may be an F1-U interface.

Processing functions of the CU and the DU may be divided based on protocol layers of a wireless network. For example, as shown in FIG. 2A, functions of a PDCP layer and protocol layers above the PDCP layer are set on the CU, and functions of protocol layers (for example, an RLC layer and a MAC layer) below the PDCP layer are set on the DU. It may be understood that division of the processing functions of the CU and the DU based on the protocol layers is merely an example, and division may alternatively be performed in another manner. For example, functions of protocol layers above the RLC layer are set on the CU, and functions of the RLC layer and protocol layers below the RLC layer are set on the DU. For another example, division may be performed in a manner in which the CU or the DU has functions of more protocol layers. For another example, division may be performed in a manner in which the CU or the DU has some processing functions of the protocol layers. This is not limited in embodiments of this application.

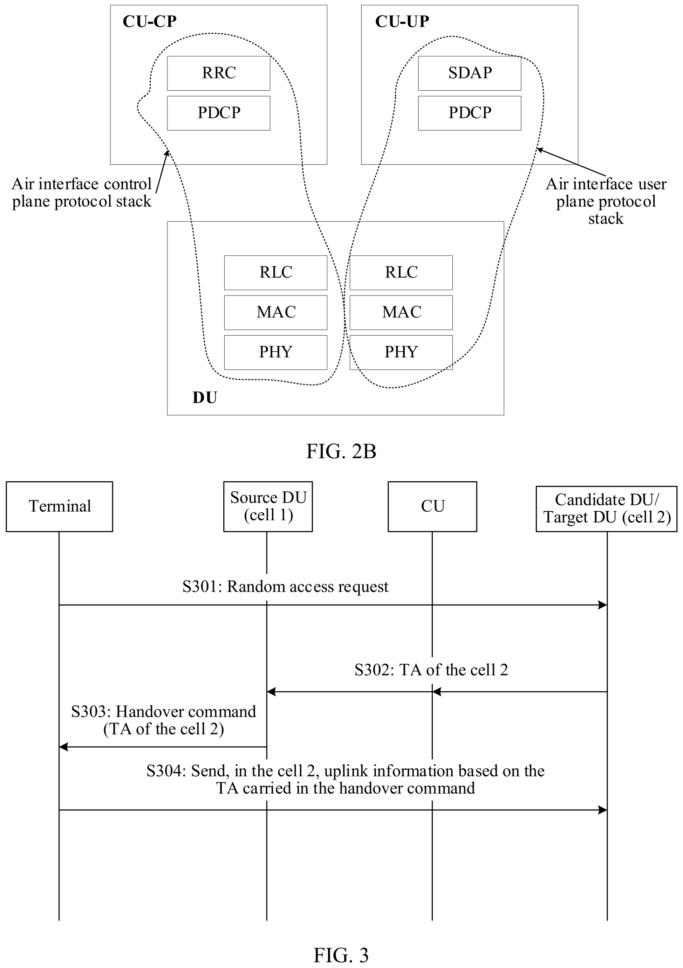

Further, a function of the CU may be implemented by a same entity, or may be implemented by different entities. For example, functions of the CU may be further divided. To be specific, a control plane and a user plane are separated and implemented by different entities: a control plane CU entity (that is, a CU-CP entity) and a user plane CU entity (that is, a CU-UP entity). The CU-CP entity and the CU-UP entity may be coupled to the DU, to jointly complete a function of a RAN device. An interface between the CU-CP entity and the CU-UP entity may be an E1 interface, an interface between the CU-CP entity and the DU may be an F1-C interface, and an interface between the CU-UP entity and the DU may be an F1-U interface. One DU and one CU-UP may be connected to one CU-CP. Under control of a same CU-CP, one DU may be connected to a plurality of CU-UPs, and one CU-UP may be connected to a plurality of DUs. Under coordination of a plurality of CU-CPs, one CU-UP may alternatively be connected to the plurality of coordinated CU-CPs. This improves flexibility of the CU-CP. FIG. 2B is a diagram of distribution of air interface protocol stacks. As shown in FIG. 2B, for both a user plane and a control plane, an air interface protocol stack may be that an RLC layer, a MAC layer, and a PHY layer are on a DU, and a PDCP layer and an upper protocol layer are on a CU.

It may be understood that in the architectures shown in FIG. 2A and FIG. 2B, signaling generated by the CU may be sent to a terminal via a DU, or signaling generated by the terminal may be sent to the CU via the DU. The DU may transparently transmit the signaling to the terminal or the CU by directly encapsulating the signaling at a protocol layer without parsing the signaling. In the following embodiments, if transmission of such signaling between the DU and the terminal is performed, sending or receiving of the signaling by the DU includes such a scenario. For example, signaling at an RRC layer or the PDCP layer is finally processed as data at the physical layer and the data is sent to the terminal, or is converted from received data at the physical layer. In this architecture, signaling at the RRC layer or the PDCP layer may also be considered as being sent by the DU, or sent by the DU and a radio frequency apparatus.

The communication system and a service scenario described in embodiments of this application are intended to describe the technical solutions in embodiments of this application more clearly, and do not constitute a limitation on the technical solutions provided in embodiments of this application. A person of ordinary skill in the art may learn that: With the evolution of a network architecture and the emergence of a new service scenario, the technical solutions provided in embodiments of this application are also applicable to similar technical problems.

The following first explains and describes related technical features in embodiments of this application. These explanations are intended to make embodiments of this application easier to be understood, and should not be construed as a limitation on the protection scope claimed in this application.

### 1. Cell switch

Cell switch can be classified into two types. One is cell switch implemented based on a layer 1/layer 2, which may be referred to as layer 1/layer 2 switch or layer 1/layer 2 triggered mobility (L1/L2 triggered mobility, LTM). The other is cell handover implemented based on a layer 3, which may be referred to as layer 3 handover (L3 handover). The layer 1 may be a physical layer, the layer 2 may be any one or more of a MAC layer, an RLC layer, a PDCP layer, and an SDAP layer, and the layer 3 may be an RRC layer. It may be understood that the layer 1/layer 2 switch may alternatively be understood as layer 1 and/or layer 2 switch. When a relationship is "and", operations related to a switch process are mainly completed by the layer 1 and the layer 2 together. When a relationship is "or", operations related to a switch process are mainly completed by the layer 1 or the layer 2. Because the layer 1 and the layer 2 are located in a protocol stack whose level is lower than the RRC layer (layer 3), the layer 1/layer 2 switch may also be referred to as lower-layer switch, lower-layer switch, or a lower-layer switch.

For the layer 3 handover, in a CU-DU split architecture, a CU receives a measurement result (the measurement result is forwarded by a DU to the CU) of the terminal, determines, based on the measurement result, whether to initiate handover, and if it is determined to initiate handover, sends a handover command to the DU, and the DU sends the handover command to the terminal. This process includes communication interaction (that is, interaction on an F1 interface) between the CU and the DU, and a maximum transmission delay of the F1 interface is approximately 3 ms to 10 ms. Consequently, a specific handover delay is caused.

However, a layer 1/layer 2 switch decision is delivered from the CU to the DU. To be specific, the DU determines, based on the measurement result of the terminal, whether to initiate switch (LTM cell switch), and directly sends the switch command to the terminal, so that F1 interaction can be effectively reduced, and a switch delay can be reduced.

### 2. Cell switch scenario

As described above, a network device may include one or more CUs and one or more DUs. For example, the network device includes one CU and a plurality of DUs. The plurality of DUs may be centrally controlled by the CU, and each of the plurality of DUs may include one or more cells. It may be understood that "the DU includes one or more cells" may also be described as "the DU manages or controls one or more cells", "one or more cells of the DU", or "one or more cells belong to the DU".

When a terminal switches between different cells, there may be a plurality of specific switch scenarios. For example, switch scenarios may be obtained through classification based on a position relationship between a source cell and a target cell. The position relationship between the source cell and the target cell may be whether the source cell and the target cell belong to a same DU. Two possible switch scenarios, that is, Scenario 1 and Scenario 2, are described herein.

Scenario 1: The terminal switches from a cell of the DU to another cell of the DU. In other words, the source cell and the target cell of the terminal belong to a same DU. Cell switch corresponding to Scenario 1 is intra-DU (intra-DU) switch.

Scenario 2: The terminal switches from a cell of a DU 1 controlled by the CU to a cell of a DU 2 controlled by the CU. In this case, the DU 1 may be referred to as a source DU, and the DU 2 may be referred to as a target DU. In other words, the source cell and the target cell of the terminal belong to different DUs controlled by a same CU. Cell switch corresponding to Scenario 2 is inter-DU (inter-DU) switch.

Both the intra-DU switch and the inter-DU switch may be implemented based on layer 1/layer 2 switch. In embodiments of this application, the inter-DU switch is used as an example for description.

### 3. Random access

Random access is a process from sending a random access request by a terminal in an attempt to access a network to establishing a basic signaling connection with a network device. For example, the random access request may be a preamble (preamble) of random access. In embodiments of this application, the random access may also be referred to as a random access process or a random access channel (random access channel, RACH) process.

Depending on whether a preamble sent by the terminal is selected by the terminal, the random access may be classified into contention-based random access (contention-based random access, CBRA) and contention-free random access (contention-free random access, CFRA). For the contention-based random access, the terminal may select a preamble. For the contention-free random access, the network device may allocate a preamble to the terminal.

### 4. First random access and second random access

A scenario in which a terminal switches from a cell 1 to a cell 2 is used as an example. The terminal may obtain TA of the cell 2 by initiating first random access, or may obtain the TA of the cell 2 by initiating second random access. The first random access is random access before switch, and may be referred to as early random access (early RACH for short). The second random access is random access after switch, and may be referred to as normal random access (normal RACH for short).

Herein, a switch occasion is that the terminal receives a switch command. "Before switch" may be understood as "before the terminal receives the switch command", that is, the first random access is random access initiated before the terminal receives the switch command (for example, a switch command indicating the terminal to switch to the cell 2). "After switch" may be understood as "after the terminal receives the switch command", that is, the second random access is random access initiated after the terminal receives the switch command (for example, the switch command indicating the terminal to switch to the cell 2).

The following describes a related implementation procedure of the first random access with reference to **FIG. 3****.** As shown in FIG. 3, the procedure may include the following steps.

S301: A terminal sends, in one or more candidate cells (a cell 2 is used as an example), a random access request to a candidate DU.

S302: After receiving the random access request, the candidate DU sends TA of the cell 2 to a source DU.

Herein, the candidate DU may measure the TA of the cell 2 based on the random access request, and send the TA of the cell 2 to a CU, so that the CU forwards the TA of the cell 2 to the source DU.

S303: If the source DU determines to initiate LTM switch, the source DU sends a switch command to the terminal, where the switch command indicates the terminal to switch to the cell 2, and the switch command includes TA of a target cell (that is, the cell 2), and correspondingly, the terminal receives the switch command.

S304: The terminal sends, in the cell 2, uplink information based on the TA carried in the switch command.

The uplink information may be carried on a physical uplink control channel (physical uplink control channel, PUCCH) or a physical uplink control channel (physical uplink shared channel, PUSCH).

In the foregoing procedure, after receiving the random access request, the candidate DU does not need to send a random access response to the terminal. In other words, after sending the random access request, the terminal may determine that the first random access is completed.

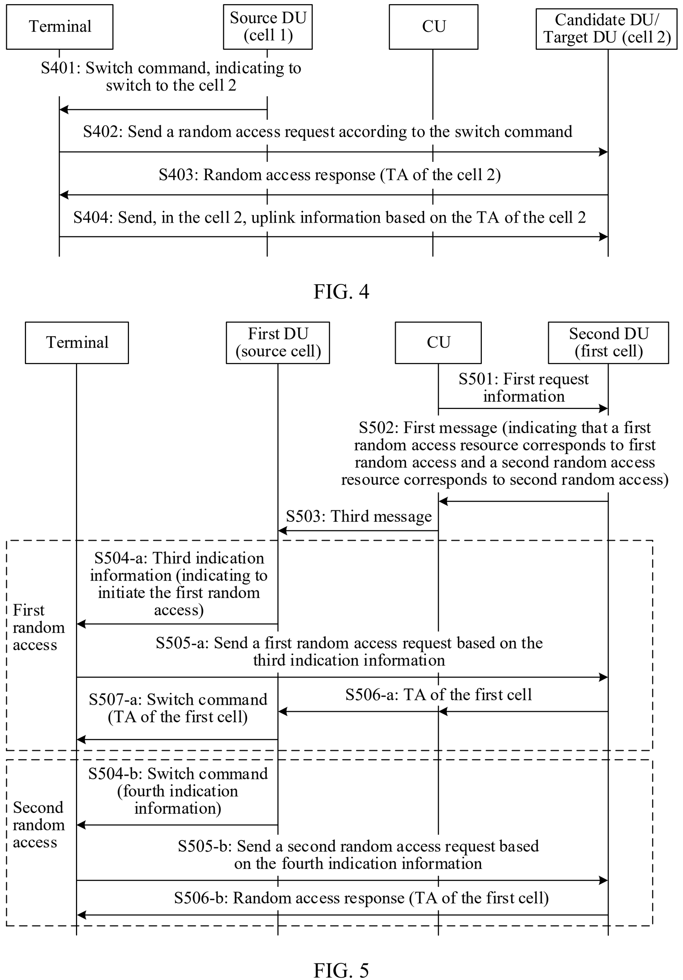

The following describes a related implementation procedure of the second random access with reference to **FIG. 4****.** As shown in FIG. 4, the procedure may include the following steps.

S401: A source DU determines to initiate LTM switch, and sends a switch command to a terminal, where the switch command indicates the terminal to switch to a cell 2, and correspondingly, the terminal receives the switch command.

S402: The terminal sends, in a target cell (that is, a cell 2), a random access request to a target DU according to the switch command.

S403: The target DU sends a random access response to the terminal based on the random access request, where the random access response includes TA of the cell 2, and correspondingly, the terminal receives the random access response.

S404: The terminal sends, in the cell 2, uplink information based on the TA carried in the random access response.

It may be understood that FIG. 3 and FIG. 4 are merely two possible procedure examples. In a specific implementation, another possible step may be further included. This is not specifically limited.

It can be learned from the descriptions of the foregoing related technical features that the terminal may initiate the first random access or the second random access, to obtain the TA of the target cell.

However, an existing communication system usually supports only one type of random access thereof, and therefore an implementation is not flexible enough.

Based on this, an embodiment of this application provides a communication method, to support both random access before switch and random access after switch, so that one type of random access thereof can be flexibly performed based on an actual requirement.

The following describes the communication method provided in embodiments of this application in detail with reference to Embodiment 1 and Embodiment 2. The communication method provided in embodiments of this application relates to communication between a plurality of network devices (for example, a first network device, a second network device, and a third network device) and a terminal. Unless otherwise specified, the "terminal" may refer to the terminal, or may refer to a component in the terminal, for example, a chip or a chip system. The "network device" may refer to the network device, or may refer to a component in the network device, for example, a chip or a chip system. The following uses an example in which "the first network device is a CU, the second network device is a first DU managed by the CU, and the third network device is a second DU managed by the CU" for description.

### Embodiment 1

**FIG. 5** is a schematic flowchart corresponding to a communication method according to Embodiment 1 of this application. As shown in FIG. 5, the method includes the following steps.

**S501:** A CU sends a first request message to a second DU, where the first request message is for requesting to allocate a random access resource corresponding to first random access and a random access resource corresponding to second random access.

Herein, after determining to initiate an LTM configuration process for a first terminal, the CU may send the first request message to a DU to which one or more candidate cells belong. A source DU to be handed over is a first DU. For example, the one or more candidate cells include a first cell, and a DU to which the first cell belongs is a second DU (that is, the second DU is a candidate DU of the first terminal). In this embodiment of this application, the first cell in a plurality of candidate cells is used as an example. The first request message sent by the CU to the second DU may be for requesting the second DU to allocate, in the first cell, the random access resource corresponding to the first random access and/or the random access resource corresponding to the second random access. Refer to this for processing for another candidate cell.

For example, the first request message may be a UE context setup request (UE context setup request) message. The first request message may include request information a and request information b. The request information a is for requesting to allocate a random access resource corresponding to the first random access, and the request information b is for requesting to allocate a random access resource corresponding to the second random access. In other words, different (separate) random access resources corresponding to different random access may be requested based on different request information. Alternatively, the first request message may include request information c. The request information c is for requesting to allocate a random access resource corresponding to the first random access and a random access resource corresponding to the second random access. In other words, random access resources corresponding to different random access may be requested based on same request information.

For example, the first request message may include information for identifying the first DU. The information for identifying the first DU may include at least one of the following: an identifier of the first DU; an identifier of a source cell of the first terminal; and an index value, where the index value is associated with the first DU and/or the source cell. For example, the index value may be generated by the CU for the first DU and/or the source cell.

For example, the first random access may be contention-free random access, and the second random access may be contention-based random access or may be contention-free random access. In embodiments of this application, "both the first random access and the second random access are contention-free random access" is used as an example for description.

**S502:** The second DU sends a first message to the CU, where the first message indicates that the first random access resource corresponds to the first random access and the second random access resource corresponds to the second random access, and correspondingly, the CU receives the first message.

Herein, the second DU allocates, in the first cell based on the first request message, the first random access resource corresponding to the first random access and the second random access resource corresponding to the second random access (that is, the first random access resource and the second random access resource are random access resources that belong to the first cell), and sends the first message to the CU.

### (1) The first message is described.

For example, the first message may be a UE context setup response (UE context setup response) message. There are a plurality of indication manners for "the first message indicates that the first random access resource corresponds to the first random access and the second random access resource corresponds to the second random access", for example, Indication manner 1 and Indication manner 2.

**Indication manner 1:** The first message may include a first field corresponding to the first random access and a second field corresponding to the second random access. The first field includes first resource information, and the first resource information indicates the first random access resource. The second field includes second resource information, and the second resource information indicates the second random access resource. In other words, the first resource information and the second resource information are separately carried in a specific field, to indicate a correspondence between a random access resource and random access.

**Indication manner 2:** The first message includes first resource information and indication information a, and second resource information and indication information b. The indication information a indicates that a random access resource (that is, the first random access resource) indicated by the first resource information corresponds to the first random access, and the indication information b indicates that a random access resource (that is, the second random access resource) indicated by the second resource information corresponds to the second random access. In other words, a correspondence between a random access resource and random access is indicated by the additional indication information a and indication information b.

### (2) The first random access resource is described.

The first random access resource may include indexes of one or more preambles, and/or time-frequency resource information for carrying the one or more preambles. For example, the first random access resource includes an index of one preamble and time-frequency resource information for carrying the preamble, or the first random access resource includes indexes of a plurality of preambles (for example, {preamble 1, preamble 2, preamble 3}) and time-frequency resource information for carrying the plurality of preambles.

For example, the first random access resource may be shared by a plurality of terminals. To be specific, the first random access resource is used by the plurality of terminals to perform the first random access, the plurality of terminals include the first terminal, and source DUs of the plurality of terminals are all first DUs. For example, the first request message includes the information for identifying the first DU, so that the second DU may allocate a same first random access resource to a plurality of terminals of a same source DU.

For example, the first random access resource allocated by the second DU based on the first request message includes {preamble 1, preamble 2, preamble 3}. If the second DU further receives a request message sent by the CU for a second terminal, and a source DU of the second terminal is also the first DU, the first random access resource allocated by the second DU may also include {preamble 1, preamble 2, preamble 3}.

In embodiments of this application, "the plurality of terminals share the first random access resource" means that the plurality of terminals may use the first random access resource to initiate the first random access. The source DU may indicate, based on an actual requirement, which random access resource (for example, one of a preamble 1, a preamble 2, or a preamble 3) in the first random access resource may be specifically used to initiate the first random access. For example, in the foregoing example, the first random access resource includes {preamble 1, preamble 2, preamble 3}. If the first terminal and the second terminal simultaneously perform the first random access, the source DU (that is, the first DU) may allocate different preambles to the first terminal and the second terminal, for example, allocate the preamble 1 to the first terminal, and allocates the preamble 2 to the second terminal. If the first terminal and the second terminal perform the first random access in sequence (not simultaneously), the first DU may allocate a same preamble to the first terminal and the second terminal. Refer to this for processing for other content related to "sharing".

### (3) The second random access resource is described.

The second random access resource may include indexes of one or more preambles, and/or time-frequency resource information for carrying the one or more preambles. For example, the second random access resource includes an index of one preamble and time-frequency resource information for carrying the preamble, or the second random access resource includes indexes of a plurality of preambles (for example, {preamble 4, preamble 5, preamble 6}) and time-frequency resource information for carrying the plurality of preambles. The second random access resource and the first random access resource may be different random access resources.

For example, the second DU may allocate the second random access resource to the first terminal. In this case, the second random access resource may be dedicated to the first terminal, that is, the second random access resource is used by the first terminal to perform the second random access. Alternatively, the second DU may allocate the second random access resource to a plurality of terminals. In this case, the second random access resource may be shared by the plurality of terminals, that is, the second random access resource is used by the plurality of terminals to perform the second random access. The plurality of terminals include the first terminal, and source DUs of the plurality of terminals are all first DUs. For details, refer to descriptions of the first random access resource.

In addition, the first message may further include other possible information, for example, an identifier of the first terminal in the first cell. The identifier may be a cell radio network temporary identifier (cell radio network temporary identifier, C-RNTI).

It may be understood that S501 is an optional step. In other words, the second DU may send the first message to the CU based on the first request message, or may actively send the first message to the CU. S502 may also be an optional step. When the CU initiates an LTM configuration process for another terminal of the first DU, if the CU obtains the first random access resource and the second random access resource (shared by the plurality of terminals of the first DU) allocated by the second DU, S502 may not need to be performed.

S503: The CU sends a third message to the first DU, where the third message indicates that the first random access resource corresponds to the first random access and the second random access resource corresponds to the second random access.

Herein, after receiving the first message, the CU may send related information (for example, the first resource information and the second resource information) in the first message to the first DU based on the third message. For example, the third message may be a UE context modification request (UE context modification request) message. For a specific implementation of "the third message indicates that the first random access resource corresponds to the first random access and the second random access resource corresponds to the second random access", refer to the foregoing first message. Details are not described again.

For example, the CU may store related information of the first terminal, for example, a source DU of the first terminal, and an identifier of the first terminal in each cell (including a source cell and a candidate cell). After receiving the first message, the CU may determine, based on the identifier that is of the first terminal in the first cell and that is carried in the first message, that the source DU of the first terminal is the first DU, and send the third message to the first DU. In other words, when sending the first message, the second DU may not sense the first DU, but the CU identifies the first message and forwards related information in the first message to the first DU.

Optionally, the third message may further include an RRC reconfiguration message. The RRC reconfiguration message may include a root sequence (referred to as a root sequence 1) of a preamble of the first random access and a root sequence (referred to as a root sequence 2) of a preamble of the second random access. The root sequence 1 and the root sequence 2 may be the same or may be different. This is not specifically limited. Correspondingly, after receiving the third message, the first DU may send the RRC reconfiguration message in the third message to the first terminal, and information (for example, the first resource information and the second resource information) in the third message other than the RRC reconfiguration message does not need to be sent to the first terminal.

Further, the method further includes S504-a to S507-a (corresponding to the first random access), or S504-b to S506-b (corresponding to the second random access). In other words, the first terminal may perform the first random access, but does not perform the second random access; or may perform the second random access, but does not perform the first random access.

**S504-a:** If determining that the first terminal needs to initiate the first random access, the first DU sends third indication information to the first terminal, where the third indication information indicates the first terminal to initiate, in the first cell, the first random access, and correspondingly, the first terminal receives the third indication information.

Herein, there are a plurality of implementations in which the first DU determines whether the first terminal needs to initiate the first random access. In a possible implementation, the first random access resource is shared by the plurality of terminals, and the first DU may determine, based on a usage status of the first random access resource, whether the first terminal needs to initiate the first random access. For example, if the first random access resource is sufficient, the first DU may determine that the first terminal needs to initiate the first random access.

For example, the third indication information indicates the first terminal to initiate the first random access on the first random access resource. For example, the first random access resource may be a resource set (for example, {preamble 1, preamble 2, preamble 3}), including a plurality of random access resources. In this case, the third indication information further indicates a specific resource used by the first terminal to initiate the first random access. For example, the third indication information includes an index of the preamble 1, that is, indicates the first terminal to initiate, by using the preamble 1, the first random access.

In addition, there are a plurality of manners in which the first DU sends the third indication information to the first terminal. For example, the first DU may send a PDCCH order (order) to the terminal, where the PDCCH order includes the third indication information.

**S505-a:** The first terminal sends, in the first cell, a first random access request based on the third indication information, and correspondingly, the second DU receives the first random access request.

Herein, the first terminal may send, based on the third indication information, the first random access request in the first cell on the first random access resource. For example, if the third indication information includes the index of the preamble 1, the first terminal may generate the preamble 1 based on the root sequence of the preamble of the first random access, and send, in the first cell, the preamble 1 to the second DU.

**S506-a:** The second DU determines that the first random access request corresponds to the first random access or the second random access, and sends TA of the first cell to the first DU when the first random access request corresponds to the first random access, and correspondingly, the first DU receives the TA of the first cell.

For example, the second DU may determine the TA of the first cell based on the first random access request. In addition, the second DU may determine whether a random access resource corresponding to the first random access request is the first random access resource or the second random access resource, to determine that the first random access request corresponds to the first random access or the second random access. Herein, because the random access resource corresponding to the first random access request is the first random access resource, the second DU may determine that the first random access request corresponds to the first random access.

It may be understood that the second DU does not need to send a random access response to the first terminal.

For example, in this embodiment of this application, information whose transmission is performed between the first DU and the second DU may be forwarded via the CU. For example, the second DU may send the TA of the first cell to the first DU via the CU. Refer to this for processing for other content related to communication between the first DU and the second DU.

**S507-a:** The first DU sends a switch command to the first terminal, where the switch command indicates the first terminal to switch to the first cell, and the switch command includes the TA of the first cell, and correspondingly, the first terminal receives the switch command.

For example, if the first DU determines to hand over the first terminal to the first cell, the first DU may determine whether the TA of the first cell is obtained through the first random access. If the TA of the first cell is obtained through the first random access (that is, S504-a to S506-a are performed), the first DU may send the switch command to the first terminal, where the switch command may include the identifier of the first cell (indicating that the first cell is a target cell) and the TA of the first cell.

Subsequently, the first terminal may send, in the first cell, uplink information based on the TA carried in the switch command. For details, refer to a conventional technology.

**S504-b:** If determining that the first terminal needs to initiate the second random access, the first DU sends fourth indication information to the first terminal, where the fourth indication information indicates the first terminal to initiate, in the first cell, the second random access, and correspondingly, the first terminal receives the fourth indication information.

For example, if the first DU determines to hand over the first terminal to the first cell, the first DU may determine whether there is valid TA of the first cell. If there is no valid TA of the first cell (for example, the TA of the first cell is not obtained by performing S504-a to S506-a, or the TA of the first cell is obtained by performing S504-a to S506-a, but the TA becomes invalid because long time has passed since obtaining, or the like), the first DU determines that the first terminal needs to initiate the second random access, and sends the switch command to the first terminal, where the switch command indicates the first terminal to switch to the first cell, and the switch command may include the fourth indication information. It may be understood that, an example in which the fourth indication information is carried in the switch command is used herein. In another implementation, the fourth indication information may alternatively be a separate message or separate signaling. This is not specifically limited.

For example, the fourth indication information indicates the first terminal to initiate the second random access on the second random access resource. As described above, the second random access resource may be a resource set (for example, {preamble 4, preamble 5, preamble 6}), including a plurality of random access resources. In this case, the fourth indication information further indicates a specific resource used by the first terminal to initiate the second random access. For example, the fourth indication information includes an index of a preamble 4, that is, indicates the first terminal to initiate, by using the preamble 4, the second random access.

**S505-b:** The first terminal sends, based on the fourth indication information, a second random access request in the first cell on the second random access resource, and correspondingly, the second DU receives the second random access request.

For example, if the fourth indication information includes the index of the preamble 4, the first terminal may generate the preamble 4 based on a root sequence of a preamble of the second random access, and send, in the first cell, the preamble 4 to the second DU.

**S506-b:** The second DU determines that the second random access request corresponds to the first random access or the second random access, and sends the TA of the first cell to the first terminal when the second random access request corresponds to the second random access, and correspondingly, the first terminal receives the TA of the first cell.

For example, the second DU may determine the TA of the first cell based on the second random access request. In addition, the second DU may determine whether a random access resource corresponding to the second random access request is the first random access resource or the second random access resource, to determine that the second random access request corresponds to the first random access or the second random access. Herein, because the random access resource corresponding to the second random access request is the second random access resource, the second DU may determine that the second random access request corresponds to the second random access.

For example, the first DU may further send second indication information to the second DU, where the second indication information indicates beam information of the target cell (that is, the first cell). Further, the second DU may send the random access response to the first terminal based on the beam information of the first cell, where the random access response includes the TA of the first cell. For example, the beam information of the first cell may include a synchronization signal and physical broadcast channel (physical broadcast channel, PBCH) block (synchronization signal and PBCH block, SSB) and/or a transmission configuration indication state (transmission configuration indication state, TCI state) that correspond/corresponds to the second random access resource (for example, the preamble 4 indicated by the fourth indication information). For example, if the beam information of the first cell includes an SSB corresponding to the second random access resource, the second DU may send the random access response to the first terminal based on an SSB beam.

The first DU may further send fifth indication information to the first terminal, where the fifth indication information indicates the beam information of the target cell (that is, the first cell). Further, the first terminal may receive the random access response based on the beam information of the first cell. For example, if the beam information of the first cell includes the SSB corresponding to the second random access resource, the first terminal may receive the random access response based on the SSB beam. The beam information of the target cell indicated by the second indication information is the same as the beam information of the target cell indicated by the fifth indication information.

For example, the fifth indication information may be carried in the switch command. A sequence in which the first DU sends the second indication information and the switch command is not limited in this embodiment of this application. For example, the first DU may first send the switch command, and then send the second indication information; or may first send the second indication information, and then send the switch command; or may send the second indication information and the switch command simultaneously.

Subsequently, the first terminal may send, in the first cell, the uplink information based on the TA of the first cell. For details, refer to the conventional technology.

Embodiment 1 is described by using an example in which the second random access is contention-free random access. In another example, the second random access in Embodiment 1 may alternatively be contention-based random access. In this case, the fourth indication information does not need to indicate a specific resource used by the first terminal to initiate the second random access, but the first terminal may select a specific resource used to initiate the second random access. For a related implementation of the second random access, refer to the conventional technology.

According to the foregoing method, both the random access before switch (that is, the first random access) and the random access after switch (that is, the second random access) may be supported, so that one type of random access thereof can be flexibly performed based on an actual requirement.

From a perspective of the first DU, because the first random access resource corresponding to the first random access may be shared by the plurality of terminals of the first DU, the first DU can flexibly allocate the first random access resource to a corresponding terminal for use, and does not need to reserve a dedicated random access resource for each terminal (for example, in the procedure shown in FIG. 3, a dedicated random access resource needs to be reserved for each terminal), so that random access resource utilization is improved, a large quantity of terminals can initiate the first random access, and a switch delay is reduced. For a terminal that does not initiate the first random access, the first DU indicates the terminal to initiate the second random access, to ensure normal switch of the terminals. In addition, the second random access resource may be dedicated to the terminal, to improve a success rate of the second random access.

From a perspective of the second DU, because the second DU allocates different random access resources for the first random access and the second random access, after receiving the random access request, the second DU may determine, based on the random access resource corresponding to the random access request, that the random access request corresponds to the first random access or the second random access, and perform a corresponding operation, to ensure normal switch of the terminal.

### Embodiment 2

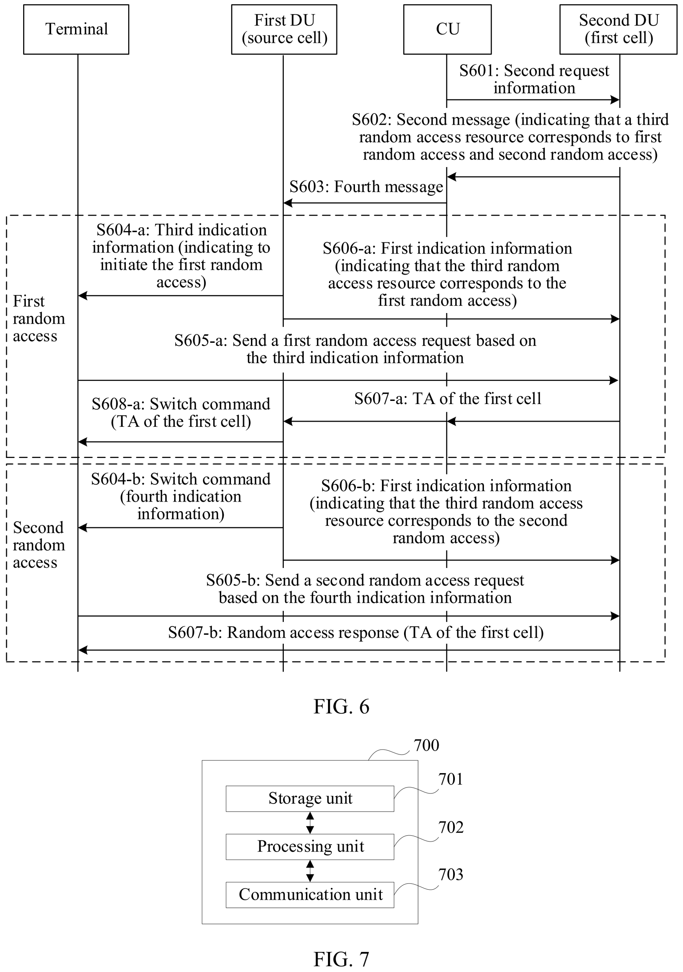

**FIG. 6** is a schematic flowchart corresponding to a communication method according to Embodiment 2 of this application. As shown in FIG. 6, the method includes the following steps.

**S601:** A CU sends a second request message to a second DU, where the second request message is for requesting to allocate a random access resource corresponding to first random access and second random access.

In the foregoing Embodiment 1, the first random access and the second random access correspond to different random access resources, and the first request message is for requesting a random access resource corresponding to the first random access and a random access resource corresponding to the second random access. In Embodiment 2, the first random access and the second random access correspond to a same random access resource. For content other than this difference, for S601, refer to S501.

In Embodiment 2, both the first random access and the second random access may be contention-free random access.

**S602:** The second DU sends a second message to the CU, where the second message indicates that a third random access resource corresponds to the first random access and the second random access, and correspondingly, the CU receives the second message.

For example, the third random access resource may include indexes of one or more preambles, and/or time-frequency resource information for carrying the one or more preambles. For example, the third random access resource includes an index of one preamble and time-frequency resource information for carrying the preamble, or the third random access resource includes indexes of a plurality of preambles (for example, {preamble 1, preamble 2, preamble 3, preamble 4, preamble 5, preamble 6}) and time-frequency resource information for carrying the plurality of preambles.

For example, the second DU may allocate a third random access resource to a plurality of terminals. In this case, the third random access resource may be shared by the plurality of terminals, that is, the third random access resource is used by the plurality of terminals to perform the first random access and the second random access. The plurality of terminals include a first terminal, and source DUs of the plurality of terminals are all the first DUs.

There are a plurality of indication manners in which the second message indicates that the third random access resource corresponds to the first random access and the second random access. For example, the second message includes a first field corresponding to the first random access and a second field corresponding to the second random access, both the first field and the second field include third resource information, and the third resource information indicates the third random access resource. For another example, the second message includes one third field corresponding to the first random access and the second random access, and the third field includes the third resource information. For another example, the second message may include the third resource information and indication information c, and the indication information c indicates that the third random access resource corresponds to the first random access and the second random access.

For example, for other content of S602, refer to the description of S502 in Embodiment 1. For example, similar to a first message, the second message may be a UE context setup response message.

**S603:** The CU sends a fourth message to the first DU, where the fourth message indicates that the third random access resource corresponds to the first random access and the second random access.

Further, the method further includes S604-a to S607-a (corresponding to the first random access), or S604-b to S606-b (corresponding to the second random access). In other words, the first terminal may perform the first random access, but does not perform the second random access; or may perform the second random access, but does not perform the first random access.

**S604-a:** If determining that the first terminal needs to initiate the first random access, the first DU sends third indication information to the first terminal, where the third indication information indicates the first terminal to initiate, in a first cell, the first random access, and correspondingly, the first terminal receives the third indication information.

For example, the third indication information indicates the first terminal to initiate the first random access on the third random access resource. As described above, the third random access resource may be a resource set (for example, {preamble 1, preamble 2, preamble 3, preamble 4, preamble 5, preamble 6}), including a plurality of random access resources. In this case, the third indication information further indicates a specific resource used by the first terminal to initiate the first random access. For example, the third indication information includes an index of a preamble 1, that is, indicates the first terminal to initiate, by using the preamble 1, the first random access.

**S605-a:** The first terminal sends, based on the third indication information, a first random access request in the first cell on the third random access resource, and correspondingly, the second DU receives the first random access request.

**S606-a:** The first DU sends first indication information to the second DU, and correspondingly, the second DU determines, based on the first indication information, that the first random access request corresponds to the first random access.

For example, the first indication information indicates that the third random access resource corresponds to the first random access or the second random access. For this step, for example, if the third random access resource includes {preamble 1, preamble 2, preamble 3, preamble 4, preamble 5, preamble 6} and the time-frequency resource information for carrying the preambles, the first indication information indicates that the preamble 1 corresponds to the first random access. Further, after receiving the first random access request (that is, the preamble 1), the second DU may determine that the first random access request corresponds to the first random access. For example, the first indication information may include an identifier of the third random access resource (for example, the index of the preamble 1 and/or time-frequency resource information for carrying the preamble 1).

Optionally, after receiving the first indication information, the second DU may send feedback information to the first DU.

It may be understood that if determining that the first terminal needs to initiate the first random access, the first DU may send the third indication information and the first indication information. A sequence in which the first DU sends the third indication information and the first indication information is not limited in this embodiment of this application. For example, S604-a, S605-a, and S606-a may be performed in sequence, or S606-a, S604-a, and S605-a may be performed in sequence, or S604-a and S606-a are performed simultaneously, and then S605-a is performed.

**S607-a:** The second DU sends TA of the first cell to the first DU, and correspondingly, the first DU receives the TA of the first cell.

**S608-a:** The first DU sends a switch command to the first terminal, where the switch command indicates the first terminal to switch to the first cell, and the switch command includes the TA of the first cell, and correspondingly, the first terminal receives the switch command.

For example, if the first DU determines to hand over the first terminal to the first cell, the first DU may determine whether there is valid TA of the first cell. If there is valid TA of the first cell (for example, the first DU obtains the TA of the first cell by performing S604-a to S607-a), the first DU may send the switch command to the first terminal, where the switch command may include an identifier of the first cell (indicating that the first cell is a target cell) and the TA of the first cell.

Subsequently, the first terminal may send, in the first cell, uplink information based on the TA carried in the switch command. For details, refer to a conventional technology.

**S604-b:** If determining that the first terminal needs to initiate the second random access, the first DU sends fourth indication information to the first terminal, where the fourth indication information indicates the first terminal to initiate, in the first cell, the second random access.

For example, if the first DU determines to hand over the first terminal to the first cell, the first DU may determine whether there is valid TA of the first cell. If there is no valid TA of the first cell (for example, the TA of the first cell is not obtained by performing S604-a to S607-a, or the TA of the first cell is obtained by performing S604-a to S607-a, but the TA becomes invalid because long time has passed since obtaining, or the like), the first DU determines that the first terminal needs to initiate the second random access, and sends the switch command to the first terminal, where the switch command indicates the first terminal to switch to the first cell, and the switch command may include the fourth indication information.

For example, the fourth indication information indicates the first terminal to initiate the second random access on the third random access resource. As described above, the third random access resource may be the resource set (for example, {preamble 1, preamble 2, preamble 3, preamble 4, preamble 5, preamble 6}), including the plurality of random access resources. In this case, the fourth indication information further indicates a specific resource used by the first terminal to initiate the second random access. For example, the fourth indication information includes an index of a preamble 4, that is, indicates the first terminal to initiate, by using the preamble 4, the second random access.

**S605-b:** The first terminal sends, in the first cell, a second random access request based on the fourth indication information, and correspondingly, the second DU receives the second random access request.

**S606-b:** The first DU sends the first indication information to the second DU, and correspondingly, the second DU determines, based on the first indication information, that the first random access request corresponds to the first random access.

For example, the first indication information indicates that the third random access resource corresponds to the first random access or the second random access. For this step, for example, if the third random access resource includes {preamble 1, preamble 2, preamble 3, preamble 4, preamble 5, preamble 6}, the first indication information indicates that the preamble 4 corresponds to the second random access. Further, after receiving the second random access request (that is, a preamble 2), the second DU may determine that the second random access request corresponds to the second random access. For example, the first indication information may include an identifier of the third random access resource (for example, the index of the preamble 4 and/or time-frequency resource information for carrying the preamble 4).

**S607-b:** The second DU sends a random access response to the first terminal, where the random access response includes the TA of the first cell.

For example, the first DU may further send second indication information to the second DU, where the second indication information indicates beam information of the target cell (that is, the first cell). Further, the second DU may send the random access response to the first terminal based on the beam information of the first cell, where the random access response includes the TA of the first cell.

The first DU may further send fifth indication information to the first terminal, where the fifth indication information indicates the beam information of the target cell (that is, the first cell). Further, the first terminal may receive the random access response based on the beam information of the first cell, thereby improving a success rate of random access. For example, the fifth indication information may be carried in the switch command. The beam information of the target cell indicated by the second indication information is the same as the beam information of the target cell indicated by the fifth indication information.

For example, the beam information of the first cell may include an SSB and/or a TCI state corresponding to the third random access resource (for example, the preamble 4 indicated by the first indication information). For example, if the beam information of the first cell includes an SSB corresponding to the second random access resource, the second DU may send the random access response to the first terminal based on an SSB beam. Correspondingly, the first terminal may receive the random access response based on the SSB beam.

According to the foregoing method, both the random access before switch (that is, the first random access) and the random access after switch (that is, the second random access) may be supported, so that one type of random access thereof can be flexibly performed based on an actual requirement.

From a perspective of the first DU, because the third random access resource may be shared by the plurality of terminals of the first DU, the first DU can flexibly allocate the third random access resource to a corresponding terminal to initiate the first random access, and does not need to reserve a dedicated random access resource for each terminal (for example, in the procedure shown in FIG. 3, a dedicated random access resource needs to be reserved for each terminal), so that random access resource utilization is improved, a large quantity of terminals can initiate the first random access, and a switch delay is reduced. For a terminal that does not initiate the first random access, the first DU indicates the terminal to initiate the second random access, to ensure normal switch of the terminals.

From a perspective of the second DU, the second DU may allocate the third random access resource for the first random access and the second random access, that is, the second DU may not distinguish between the first random access and the second random access when allocating a random access resource. Whether the third random access resource is specifically used for the first random access or the second random access may be flexibly determined by the first DU (source DU), and indicated to the second DU, so that the second DU may determine, based on an indication of the first DU, random access corresponding to a random access request, to ensure normal switch of the terminal.

For the foregoing embodiments, it may be understood that:
(1) The foregoing focuses on the differences between Embodiment 1 and Embodiment 2, and content other than the differences may be mutually referenced.
(2) The step numbers in each flowchart described in the foregoing embodiments are merely a procedure execution example, and do not constitute a limitation on a step execution sequence. In embodiments of this application, there is no strict execution sequence between steps having no time sequence dependence relationship with each other. Not all the steps shown in the flowcharts are mandatory steps. Some steps may be deleted from the flowcharts based on an actual requirement, or another possible step may be added to the flowcharts based on an actual requirement.
(3) The message name used in the foregoing embodiments is merely an example, and the message name is not limited in embodiments of this application. The foregoing uses the inter-DU switch as an example for description. The solutions in embodiments of this application may also be extended to another scenario. For example, the solutions may be extended to an intra-DU (that is, the first DU and the second DU are a same DU). In this case, communication between the first DU and the second DU may not be included. For another example, the solutions may be extended to an inter-gNB scenario (that is, the first DU and the CU belong to one gNB, and the second DU belongs to another gNB). In this case, the UE context setup request message may be replaced with a switch request message, and the UE context setup response message may be replaced with a switch response message.

The foregoing mainly describes the solutions provided in embodiments of this application from a perspective of interaction between the terminal and the network device. It may be understood that, to implement the foregoing functions, the terminal or the network device may include corresponding hardware structures and/or software modules for performing the functions. A person skilled in the art should be easily aware that, in combination with units and algorithm steps of the examples described in embodiments disclosed in this specification, embodiments of this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the network device may be divided into functional units based on the foregoing method examples. For example, each functional unit may be obtained through division based on each corresponding function, or two or more functions may be integrated into one unit. The integrated unit may be implemented in a form of hardware, or may be implemented in a form of a software functional unit.

When an integrated unit is used, FIG. 7 is a possible example block diagram of an apparatus according to an embodiment of this application. As shown in FIG. 7, the apparatus 700 may include a processing unit 702 and a communication unit 703. The processing unit 702 is configured to control and manage actions of the apparatus 700. The communication unit 703 is configured to support the apparatus 700 in communicating with another device. Optionally, the communication unit 703 is also referred to as a transceiver unit, and may include a receiving unit and/or a sending unit, respectively configured to perform a receiving operation and a sending operation. The apparatus 700 may further include a storage unit 701, configured to store program code and/or data of the apparatus 700.
(1) The apparatus 700 may be the third network device (for example, the second DU) in the foregoing embodiment. The processing unit 702 supports the apparatus 700 in performing actions of the second DU in the foregoing method examples. Alternatively, the processing unit 702 mainly performs an internal action of the second DU in the method examples, and the communication unit 703 supports communication between the apparatus 700 and another device.

For example, in an embodiment, the communication unit 703 is configured to receive a random access request from a first terminal in a first cell. The processing unit 702 is configured to determine that the random access request corresponds to first random access or second random access. The communication unit 703 is further configured to: send timing advance TA of the first cell to the first network device when the random access request corresponds to the first random access; or send the TA to the first terminal when the random access request corresponds to the second random access. The first random access is random access before switch, and the second random access is random access after switch.

In a possible design, the processing unit 702 is specifically configured to: if a random access resource corresponding to the random access request is a first random access resource, determine that the random access request corresponds to the first random access; or if a random access resource corresponding to the random access request is a second random access resource, determine that the random access request corresponds to the second random access.

In a possible design, the communication unit 703 is further configured to send a first message to the first network device, where the first message indicates that the first random access resource corresponds to the first random access and the second random access resource corresponds to the second random access.

In a possible design, the communication unit 703 is further configured to receive a first request message from the first network device, where the first request message is for requesting to allocate the random access resource corresponding to the first random access and/or the random access resource corresponding to the second random access.

In a possible design, the communication unit 703 is further configured to: receive first indication information from a second network device; and determine, based on the first indication information, that the random access request corresponds to the first random access or the second random access.

In a possible design, the random access request corresponds to a third random access resource. The processing unit 702 is specifically configured to: if the first indication information indicates that the third random access resource corresponds to the first random access, determine that the random access request corresponds to the first random access; or if the first indication information indicates that the third random access resource corresponds to the second random access, determine that the random access request corresponds to the second random access.

In a possible design, the communication unit 703 is further configured to send a second message to the first network device, where the second message indicates that the third random access resource corresponds to the first random access and the second random access.

In a possible design, the communication unit 703 is further configured to receive a second request message from the first network device, where the second request message is for requesting to allocate a random access resource corresponding to the first random access and the second random access.

In a possible design, the communication unit 703 is further configured to: receive second indication information from the second network device, where the second indication information indicates beam information of the first cell; and send a random access response to the first terminal based on the beam information, where the random access response includes the TA.

(2) The apparatus 700 may be the second network device (for example, the first DU) in the foregoing embodiment. The processing unit 702 supports the apparatus 700 in performing actions of the first DU in the foregoing method examples. Alternatively, the processing unit 702 mainly performs an internal action of the first DU in the method examples, and the communication unit 703 supports communication between the apparatus 700 and another device.

For example, in an embodiment, the communication unit 703 is configured to receive a third message from a first network device, where the third message indicates that a first random access resource corresponds to first random access and a second random access resource corresponds to second random access. The processing unit 702 is configured to determine that a first terminal needs to initiate the first random access or the second random access. The communication unit 703 is further configured to: send third indication information to the first terminal when the first terminal needs to initiate the first random access, where the third indication information indicates the first terminal to send a first random access request in a first cell on the first random access resource; and send fourth indication information to the first terminal when the first terminal needs to initiate the second random access, where the fourth indication information indicates the first terminal to send a second random access request in the first cell on the second random access resource. The first random access is random access before switch, and the second random access is random access after switch.

In a possible design, if it is determined that the first terminal needs to initiate the first random access, the communication unit 703 is further configured to: receive TA of the first cell from a third network device; and send a switch command to the first terminal, where the switch command indicates that the first cell is a target cell, and the switch command includes the TA.

In a possible design, if it is determined that the first terminal needs to initiate the second random access, the communication unit 703 is further configured to send second indication information to the third network device, where the second indication information indicates beam information of the first cell, and the beam information is used by the third network device to send the TA of the first cell to the first terminal.

In a possible design, if it is determined that the first terminal needs to initiate the second random access, the communication unit 703 is further configured to send fifth indication information to the first terminal, where the fifth indication information indicates the beam information of the first cell, and the beam information is used by the first terminal to receive the TA of the first cell.

(3) The apparatus 700 may be the second network device (for example, the first DU) in the foregoing embodiment. The processing unit 702 supports the apparatus 700 in performing actions of the first DU in the foregoing method examples. Alternatively, the processing unit 702 mainly performs an internal action of the first DU in the method examples, and the communication unit 703 supports communication between the apparatus 700 and another device.

For example, in an embodiment, the communication unit 703 is configured to receive a fourth message from a second network device, where the fourth message indicates that a third random access resource corresponds to first random access and second random access. The processing unit 702 is configured to determine that a first terminal needs to initiate the first random access or the second random access. The communication unit 703 is further configured to: send third indication information to the first terminal when the first terminal needs to initiate the first random access, where the third indication information indicates the first terminal to send a first random access request in a first cell on the third random access resource; and send fourth indication information to the first terminal when the first terminal needs to initiate the second random access, where the fourth indication information indicates the first terminal to send a second random access request in the first cell on the third random access resource. The first random access is random access before switch, and the second random access is random access after switch.

In a possible design, if it is determined that the first terminal needs to initiate the first random access, the communication unit 703 is further configured to: receive TA of the first cell from a third network device; and send a switch command to the first terminal, where the switch command indicates that the first cell is a target cell, and the switch command includes the TA.

In a possible design, if it is determined that the first terminal needs to initiate the second random access, the communication unit 703 is further configured to send second indication information to the third network device, where the second indication information indicates beam information of the first cell, and the beam information is used by the third network device to send the TA of the first cell to the first terminal.

In a possible design, if it is determined that the first terminal needs to initiate the second random access, the communication unit 703 is further configured to send fifth indication information to the first terminal, where the fifth indication information indicates the beam information of the first cell, and the beam information is used by the first terminal to receive the TA of the first cell.

It should be understood that division of the units in the foregoing apparatus is merely logical function division. During an actual implementation, all or some of the units may be integrated into one physical entity, or may be physically separated. In addition, all the units in the apparatus may be implemented in a form of software invoked by a processing element, or may be implemented in a form of hardware; or some units may be implemented in a form of software invoked by a processing element, and some units may be implemented in a form of hardware. For example, each unit may be a separately disposed processing element, or may be integrated into a chip of the apparatus for implementation. In addition, each unit may alternatively be stored in a memory in a form of a program to be invoked by a processing element of the apparatus to perform a function of the unit. In addition, all or some of the units may be integrated, or may be implemented independently. The processing element herein may also be referred to as a processor, and may be an integrated circuit having a signal processing capability. In an implementation process, operations in the foregoing methods or the foregoing units may be implemented by using a hardware integrated logic circuit in the processor element or may be implemented in a form in which the processing element invokes software.

In an example, a unit in any one of the foregoing apparatuses may be one or more integrated circuits configured to implement the foregoing methods, for example, one or more application-specific integrated circuits (application-specific integrated circuit, ASIC), one or more microprocessors (digital signal processor, DSP), one or more field-programmable gate arrays (field-programmable gate array, FPGA), or a combination of at least two of these forms of integrated circuits. For another example, when the units in the apparatus may be implemented in a form in which the processing element schedules a program, the processing element may be a processor, for example, a general-purpose central processing unit (central processing unit, CPU) or another processor that can invoke the program. For still another example, the units may be integrated and implemented in a form of a system-on-a-chip (system-on-a-chip, SoC).

The foregoing unit configured for receiving is an interface circuit of the apparatus, and is configured to receive a signal from another apparatus. For example, when the apparatus is implemented in a manner of a chip, the receiving unit is an interface circuit that is of the chip and that is configured to receive a signal from another chip or apparatus. The foregoing unit configured for sending is an interface circuit of the apparatus, and is configured to send a signal to another apparatus. For example, when the apparatus is implemented in a manner of a chip, the sending unit is an interface circuit that is of the chip and that is configured to send a signal to another chip or apparatus.

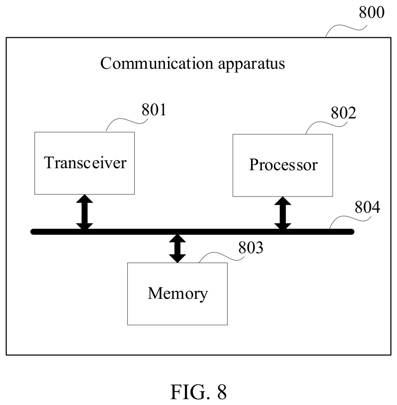

Based on the foregoing embodiments, an embodiment of this application further provides a communication apparatus. As shown in FIG. 8, the communication apparatus 800 may include a transceiver 801 and a processor 802. Optionally, the communication apparatus 800 may further include a memory 803. The memory 803 may be disposed inside the communication apparatus 800, or may be disposed outside the communication apparatus 800. The processor 802 may control the transceiver 801 to receive and send a message and the like.

Specifically, the processor 802 may be a central processing unit (central processing unit, CPU), a network processor (network processor, NP), or a combination of a CPU and an NP. The processor 802 may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field programmable logic gate array (field programmable gate array, FPGA), generic array logic (generic array logic, GAL), or any combination thereof.

The transceiver 801, the processor 802, and the memory 803 are connected to each other. Optionally, the transceiver 801, the processor 802, and the memory 803 are connected to each other through a bus 804. The bus 804 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one bold line is for representing the bus in FIG. 8, but this does not mean that there is only one bus or only one type of bus.

In an optional implementation, the memory 803 is configured to store a program and the like. Specifically, the program may include program code, and the program code includes computer operation instructions. The memory 803 may include a RAM, or may further include a non-volatile memory (non-volatile memory), for example, one or more magnetic disk memories. The processor 802 executes the application program stored in the memory 803, to implement the foregoing function, so that a function of the communication apparatus 800 is implemented.

For example, the communication apparatus 800 may be the first DU in the foregoing embodiments, or may be the second DU in the foregoing embodiments.

In an embodiment, when the communication apparatus 800 implements a function of the first DU in the foregoing method embodiments, the transceiver 801 may implement receiving and sending operations performed by the first DU in the foregoing method embodiments; and the processor 802 may implement an operation other than the receiving and sending operations performed by the first DU in the foregoing method embodiments. Specifically, for related specific descriptions, refer to related descriptions in the foregoing embodiments. Details are not described herein again.

In another embodiment, when the communication apparatus 800 implements a function of the second DU in the foregoing method embodiments, the transceiver 801 may implement receiving and sending operations performed by the second DU in the foregoing method embodiments; and the processor 802 may implement an operation other than the receiving and sending operations performed by the second DU in the foregoing method embodiments. Specifically, for related specific descriptions, refer to related descriptions in the foregoing embodiments. Details are not described herein again.

The terms "system" and "network" may be used interchangeably in embodiments of this application. "At least one" means one or more, and "a plurality of" means two or more. The term "and/or" describes an association relationship of associated objects, and indicates that three relationships may exist. For example, A and/or B may indicate the following three cases: Only A exists, both A and B exist, and only B exists, where A and B may be singular or plural. The character "/" generally indicates an "or" relationship between the associated objects. "At least one item (piece) of the following" or a similar expression thereof refers to any combination of these items, including any combination of singular items (pieces) or plural items (pieces). For example, "at least one of A, B, and C" includes A, B, C, AB, AC, BC, or ABC. In addition, unless otherwise specified, ordinal numbers such as "first" and "second" in embodiments of this application are used to distinguish between a plurality of objects, and are not intended to limit a sequence, a time sequence, priorities, or importance of the plurality of objects.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each procedure and/or each block in the flowcharts and/or the block diagrams and a combination of a procedure and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more procedures in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

The computer program instructions may alternatively be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more procedures in the flowcharts and/or in one or more blocks in the block diagrams.

It is clearly that a person skilled in the art can make various modifications and variations to this application without departing from the spirit and scope of this application. This application is intended to cover these modifications and variations of this application provided that the modifications and variations in this application fall within the scope of protection defined by the following claims and equivalent technologies thereof.

## Claims

1. A communication method, wherein the method comprises:
receiving, in a first cell, a random access request from a first terminal;
determining that the random access request corresponds to first random access or second random access; and
sending timing advance TA of the first cell to a first network device when the random access request corresponds to the first random access; or
sending the TA to the first terminal when the random access request corresponds to the second random access, wherein
the first random access is random access before switch, and the second random access is random access after switch.

2. The method according to claim 1, wherein determining that the random access request corresponds to the first random access or the second random access comprises:
if a random access resource corresponding to the random access request is a first random access resource, determining that the random access request corresponds to the first random access; or
if a random access resource corresponding to the random access request is a second random access resource, determining that the random access request corresponds to the second random access.

3. The method according to claim 2, wherein the method further comprises:
sending a first message to the first network device, wherein the first message indicates that the first random access resource corresponds to the first random access and the second random access resource corresponds to the second random access.

4. The method according to claim 3, wherein the method further comprises:
receiving a first request message from the first network device, wherein the first request message is for requesting to allocate a random access resource corresponding to the first random access and a random access resource corresponding to the second random access.

5. The method according to any one of claims 2 to 4, wherein the first random access is contention-free random access; and
the first random access resource is used by a plurality of terminals to perform the first random access, and source network devices of the plurality of terminals are all second network devices.

6. The method according to any one of claims 2 to 5, wherein the second random access is contention-free random access; and
the second random access resource is used by a plurality of terminals to perform the second random access, and source network devices of the plurality of terminals are all second network devices, or the second random access resource is dedicated to the first terminal.

7. The method according to claim 1, wherein the method further comprises:
receiving first indication information from a second network device; and
determining, based on the first indication information, that the random access request corresponds to the first random access or the second random access.

8. The method according to claim 7, wherein the random access request corresponds to a third random access resource; and
determining, based on the first indication information, that the random access request corresponds to the first random access or the second random access comprises:
if the first indication information indicates that the third random access resource corresponds to the first random access, determining that the random access request corresponds to the first random access; or
if the first indication information indicates that the third random access resource corresponds to the second random access, determining that the random access request corresponds to the second random access.

9. The method according to claim 7 or 8, wherein the method further comprises:
sending a second message to the first network device, wherein the second message indicates that the third random access resource corresponds to the first random access and the second random access.

10. The method according to claim 9, wherein the method further comprises:
receiving a second request message from the first network device, wherein the second request message is for requesting to allocate a random access resource corresponding to the first random access and the second random access.

11. The method according to any one of claims 7 to 10, wherein both the first random access and the second random access are contention-free random access; and
the third random access resource is used by a plurality of terminals to perform the first random access and the second random access, and source network devices of the plurality of terminals are all second network devices.

12. The method according to any one of claims 1 to 11, wherein sending the TA to the first terminal comprises:
receiving second indication information from the second network device, wherein the second indication information indicates beam information of the first cell; and
sending a random access response to the first terminal based on the beam information, wherein the random access response comprises the TA.

13. A communication method, wherein the method comprises:
receiving a third message from a first network device, wherein the third message indicates that a first random access resource corresponds to first random access and a second random access resource corresponds to second random access; and
if it is determined that a first terminal needs to initiate the first random access, sending third indication information to the first terminal, wherein the third indication information indicates the first terminal to send a first random access request in a first cell on the first random access resource; or
if it is determined that the first terminal needs to initiate the second random access, sending fourth indication information to the first terminal, wherein the fourth indication information indicates the first terminal to send a second random access request in the first cell on the second random access resource, wherein
the first random access is random access before switch, and the second random access is random access after switch.

14. The method according to claim 13, wherein the first random access is contention-free random access; and
the first random access resource is used by a plurality of terminals to perform the first random access, and source network devices of the plurality of terminals are all second network devices.

15. The method according to claim 13 or 14, wherein the second random access is contention-free random access; and
the second random access resource is used by a plurality of terminals to perform the second random access, and source network devices of the plurality of terminals are all second network devices, or the second random access resource is dedicated to the first terminal.

16. A communication method, wherein the method comprises:
receiving a fourth message from a second network device, wherein the fourth message indicates that a third random access resource corresponds to first random access and second random access; and
if it is determined that a first terminal needs to initiate the first random access, sending third indication information to the first terminal, wherein the third indication information indicates the first terminal to send a first random access request in a first cell on the third random access resource; or
if it is determined that the first terminal needs to initiate the second random access, sending fourth indication information to the first terminal, wherein the fourth indication information indicates the first terminal to send a second random access request in the first cell on the third random access resource, wherein
the first random access is random access before switch, and the second random access is random access after switch.

17. The method according to claim 16, wherein both the first random access and the second random access are contention-free random access; and
the third random access resource is used by a plurality of terminals to perform the first random access and the second random access, and source network devices of the plurality of terminals are all second network devices.

18. The method according to claim 16 or 17, wherein the method further comprises:
sending first indication information to a third network device, wherein
if it is determined that the first terminal needs to initiate the first random access, the first indication information indicates that the third random access resource corresponds to the first random access; or if it is determined that the first terminal needs to initiate the second random access, the first indication information indicates that the third random access resource corresponds to the second random access.

19. The method according to any one of claims 13 to 18, wherein if it is determined that the first terminal needs to initiate the first random access, the method further comprises:
receiving TA of the first cell from the third network device; and
sending a switch command to the first terminal, wherein the switch command indicates that the first cell is a target cell, and the switch command comprises the TA.

20. The method according to any one of claims 13 to 19, wherein if it is determined that the first terminal needs to initiate the second random access, the method further comprises:
sending second indication information to the third network device, wherein the second indication information indicates beam information of the first cell, and the beam information is used by the third network device to send the TA of the first cell to the first terminal.

21. The method according to any one of claims 13 to 20, wherein if it is determined that the first terminal needs to initiate the second random access, the method further comprises:
sending fifth indication information to the first terminal, wherein the fifth indication information indicates the beam information of the first cell, and the beam information is used by the first terminal to receive the TA of the first cell.

22. A communication apparatus, comprising a module configured to perform the method according to any one of claims 1 to 21.

23. A communication apparatus, comprising a processor, wherein the processor is coupled to a memory, the memory stores a computer program, and the processor is configured to invoke the computer program in the memory, to cause the communication apparatus to perform the method according to any one of claims 1 to 21.

24. A communication system, wherein the communication system comprises a first communication apparatus and a second communication apparatus, the first communication apparatus is configured to perform the method according to any one of claims 1 to 12, and the second communication apparatus is configured to perform the method according to any one of claims 13 to 21.

25. A computer-readable storage medium, wherein the storage medium stores a computer program or instructions, and when the computer program or the instructions are executed by a computer, the method according to any one of claims 1 to 21 is implemented.

26. A computer program product, wherein when a computer reads and executes the computer program product, the computer is caused to perform the method according to any one of claims 1 to 21.
